# EUROPEAN PATENT SPECIFICATION

(11) **EP 2 514 294 B1**
(45) Date of publication and mention of the grant of the patent: **12.08.2015**
(21) Application number: 12164435.5
(22) Date of filing: 17.04.2012
(51) Int. Cl.: A01C 23/00

(54) **Improved slurry distribution system**
Verbessertes Gülleverteilungssystem
Système amélioré de distribution du lisier

(30) Priority: 18.04.2011 DK 201170186
(43) Date of publication of application: 24.10.2012
(73) Proprietor: Toft, Morten, 6600 Vejen (DK)
(72) Inventor: Toft, Morten, 6600 Vejen (DK)
(74) Representative: Tellefsen, Jens J.

(56) References cited:
- EP-A1- 0 569 321
- EP-A1- 1 972 189
- EP-A2- 2 272 316
- RU-C1- 2 343 680
- US-A- 5 907 925

## Description

### Field of the Invention

The present invention relates to a mobile system and a method for optimising the fertilizer value of a slurry and for reducing the emission of for example ammonia and odur.

### Background of the Invention

Crops need nutrients to be able to grow properly. Especially, compounds such as nitrogen, phosphor, and potassium are important to promote an efficient yield. However, micronutrients such as manganese, boron, magnesium, zinc, copper, and selenium are needed as well. To provide the crops with sufficient amounts of nutrients, nutrients are added separately to the crops by fertilization or manuring for example by distributing slurry.

The nitrogen present in the slurry is both organically bound nitrogen as well as mineral nitrogen. The mineral nitrogen in the form of nitrites, nitrates, and ammonium is easily absorbed by the crops. However, the balance between ammonium and ammonia depends on the pH of the slurry. Thus, the higher the pH is, the more ammonia is present and may evaporate, depleting the slurry from an important nitrogen source. Significant amounts of ammonia are commonly known to evaporate from slurry during distribution to for example an agricultural field. Currently, countries like Denmark and Holland are introducing legislation to limit emission of for example ammonia which damages nitrogen sensitive nature areas through eutrophication.

The emission of ammonia reduces the fertilizing effect of the slurry especially when the slurry is delivered on top of the soil causing extensive volatilisation of primarily ammonia. Traditionally, this has been solved by making a furrow in the soil and placing the slurry into the furrow, or injecting the slurry directly into the soil. However, lowering the pH of the slurry converts ammonia into ammonium which does not evaporate, and hereby the fertilization effect is maintained and the emission of ammonia prevented. The lowering of pH furthermore promotes the accessibility of manganese to the crops due to the higher solubility of the manganese oxides. An effect further improved by the decomposition of ammonium, which further induces an acidification of the soil, and hence, promotes further accessibility of manganese. The fertilizing value of the slurry is thus further increased.

US 5907925 A discloses a reel trailer for spreading manure stored in a stationary manure container. Acid is mixed into to the manure in the stationary container prior to spreading. The reel trailer comprise a reel on which the manure delivery tube rolled up. The tube on the reel is unrolled when the trailer travels across the field. The reel trailer is connected to the stationary manure storage and applies the manure to the fields by transporting the manure through the tubes. The reel trailer carries an additional tank for adding a nitrogen source to the manure immediately before applying manure on the field.

EP2272316 describes a mobile system comprising a slurry tanker and an acid tank for adjusting the pH of the slurry. The mobile system described herein reduces the pH of the slurry and hereby reduces the emission of for example ammonia.

Nitrogen, phosphor, and potassium are present in high amounts in the slurry. The content of the compounds are, however, not adjusted to the need of the crops. The need for the individual nutrients is different depending on the type of crop present on the field along with the specific type of soil present in the field. Hence, the amount of slurry to be distributed depends not only from where and when the slurry is derived but also on the crops onto which it is to be distributed along with the soil of the field.

Furthermore, the ratio between the nutrients in the slurry such as nitrogen and phosphor can differ. Hence, it is difficult to meet all the needs of the crops with regard to nutrients from one batch of slurry without the risk of overdosing and/or under-treating one or more of the nutrients. Under-treating one or more nutrients result in insufficient growth of the crops and often additional fertilizer is to be added to the field during an additional distribution round to obtain sufficient fertilization of the plants. Overdosing one or more nutrients result in leaching of excess nutrients from the soil into lakes and rivers damaging the environment.

### Object of the Invention

It is the object of the present invention to provide a mobile system for improving the fertilizing value of a slurry to save time and money by avoiding additional distribution of fertilizer.

It is further the object of the present invention to provide a mobile system, which improves the fertilizing value of a slurry as well as reduces the emission of for example ammonia and odour.

It is further the object of the present invention to provide a mobile system for adjusting the nutrient content of the slurry in order to avoid overdosing and under-treating of one or more nutrients.

### Description of the Invention

This object is achieved by a mobile system for optimising the fertilizing value of a slurry, such as a liquid manure, where said mobile system is mounted on a mobile unit and comprises
- a slurry tanker; where said slurry tanker comprises a container and a slurry conduit, where said slurry tanker is in liquid communication with
- acid adding means for adding/injecting an acid to said content of said slurry tanker at an acid injection site arranged along the pathway of the slurry from a slurry pump to distribution means, where said slurry tanker and/or acid adding means is in liquid communication with
- distributing means for allowing a modified slurry to be placed on the application site, and where said slurry conduit transports a content of said slurry tanker from said container to said distributing means
where said mobile unit comprises at least one nitrogen tank containing a liquid nitrogen-containing composition and nitrogen injecting means for adding said liquid nitrogen-containing composition prior to the addition of acid either into said content of said slurry tanker or for adding said nitrogen-containing composition to the slurry conduit prior to the addition of acid, or for adding said nitrogen-containing composition into a mixer, which is arranged in the slurry conduit, and into which mixer the acid is also added by the acid adding means.

Thus, when the liquid nitrogen-containing composition is added to the content of the slurry tanker before the acid of the mobile system, the most efficient control of the pH of the content of the slurry tanker can be obtained and the emission of ammonia reduced, whereby the fertilizing value of the modified slurry is optimised.

In a further advantageous embodiment, said nitrogen tank is a pressure tank and said liquid nitrogen-containing composition is anhydrous ammonia.

This invention includes a mobile system as described in EP2272316 and EP2272315.

It should be emphasised that throughout the application the term "slurry" is to be interpreted as any kind of liquid manure, organic fertilizer, sludge or similar liquids or semi-liquids in the form of a watery mixture of primarily insoluble matter. Throughout the application the terms "slurry" and "content of the slurry tanker" is used interchangeable.

Furthermore, it should be emphasised that throughout the application the term "application site" is to be interpreted as any kind of field, ground or the like, wherein the fertilizing and/or nutritive qualities of the slurry is utilized.

Throughout the application the term modified substance is to be interpreted as the product resulting from the process of treating slurry with at least acid and/or a liquid nitrogen-containing composition.

Throughout the application a valve can be for example a valve comprising actuating means such as manual, hydraulic or electric activated actuating means. Additionally, the valve can be a one-way valve. Additionally, a pressure-controlled safety valve can be arranged on the nitrogen tank, in order to adjust the pressure inside the tank.

The valves can be either manually operated or automatically operated by a control-system, where the control-system controls the opening and closing of the valves.

The mobile system is mounted on a mobile unit such as a tractor. Hereby, it can easily be moved to the field and around the field. The mobile system comprises a slurry tanker, which contains for example slurry. The mobile system further comprises slurry conduits for transporting the content of the slurry tanker from the slurry tanker to the distributing means. The distributing means can for example comprise a band spreading system, an injection system or a broad spreading system for distributing the content of the slurry tanker to the application site e.g. a field. Any distributing means commonly known to the person skilled in the art for distributing for example slurry to a field can be used.

In an alternative embodiment, the mobile system is mounted on an integrated unit such as a self propelled slurry tanker.

The liquid communication between the slurry tanker and the distributing means is in the form of conduits such as for example pipes and tubes through which the content of the slurry tanker is pumped from the slurry tanker to the distribution means.

The mobile system further comprises acid adding means for injecting/adding an acid to the content of the slurry tanker, where the means comprises an acid tank, an acid pump and valves in connection with the conduits.

The acid tank can be arranged at the front of the mobile unit for example attached via a three-point link as a front tank. In one embodiment, the acid tank is enclosed in an enclosure to protect the acid tank from damaging during transportation.

Alternatively, the acid tank can be arranged at the slurry tanker or as a part of the slurry tanker.

Examples of suitable acids to be provided in the acid tank is for example mineral acids like sulphuric acid, phosphoric acid, hydrochloric acid, nitric acid, boric acid, hydrofluoric acid, hydrobromic acid, hydrochloric acid, or various organic acids like formic acid, acetic acid, oxalic acid, citric acid, or lactic acid.

The liquid communication between the acid adding means, the slurry tanker, and the distribution means is in the form of conduits such as tubes and pipes through which the acid is pumped by an acid pump from the acid tank to be mixed with the content of the slurry tanker for example to the slurry conduits. Alternatively, the conduits for transporting acid can for example be arranged next to the slurry conduit and the acid mixed with the slurry in the mixer.

In one embodiment, the acid pump can be arranged in combination with the acid tank.

In order to prevent any potential damage to the slurry tanker and create potential explosive situations, the acid can be added to the content of the slurry tanker during application to the field. Injecting the acid directly into- or near the slurry pump for pumping the content of the slurry tanker from the slurry tanker is therefore advantageous. The acid is evenly mixed with the content of the slurry tanker and transported directly to the application site i.e. where the content is to be distributed without any danger. However, the acid pump/acid injection site can be arranged at several positions along the pathway of the content from the slurry tanker from the slurry pump and to the distribution means.

In one embodiment, the mobile system further comprises at least one pH sensor. Hereby, the pH of the content of the slurry tanker can be measured and the amount of acid added to the content adjusted accordingly. Advantageously, the pH of the content of the slurry tanker is to be lower than 6.5 after adding the liquid nitrogen-containing solution and the acid.

The mobile unit further comprises at least one nitrogen tank containing a liquid nitrogen-containing composition and nitrogen injecting means for injecting a liquid nitrogen-containing composition to the content of the slurry tanker. From the at least one nitrogen tank, the liquid nitrogen-containing composition is injected into the content of the slurry tanker via the nitrogen injecting means. The nitrogen injecting means and the nitrogen tank are in liquid communication with the slurry tanker and/or the additional components of the mobile system. The nitrogen injecting means can for example be one or more of conduits, valves, and pumps. The pump can be provided for the liquid nitrogen-containing composition to be transported from the nitrogen tank to the content of the slurry tanker. When the liquid nitrogen-containing composition is under pressure, a pump is normally redundant since the liquid nitrogen-containing composition is automatically transferred from the nitrogen tank.

In one embodiment, more nitrogen injecting means can be distributed along the nitrogen tank. Hereby, the liquid nitrogen-containing composition can be quickly injected into the content of the slurry tanker and the amount of nitrogen can be easily adjusted.

Advantageously, the number of tanks can be one, two, three or four and so forth. Providing more than one nitrogen tank enables a liquid nitrogen-containing composition to be injected into the content of the slurry tanker more quickly. The nitrogen tanks need not be connected in the mobile system at the same place or nearly the same place. Thus, the liquid nitrogen-containing composition can be injected to the content of the slurry tanker at different places.

Alternatively, one nitrogen tank can be used as a basis nitrogen tank injecting the first amount of a liquid nitrogen-containing composition. Additional nitrogen tanks can then inject a liquid nitrogen-containing composition at later times for example after measurement by a NIR sensor. Alternatively, the nitrogen tanks can contain different types of nitrogen containing substances e.g. one nitrogen tank containing liquid ammonia, another nitrogen tank containing a solution of nitrate.

By adjusting the nitrogen content of the content of the slurry tanker, the level of nitrogen in the content of the slurry tanker increases as compared to the level of the other nutrients, hereby it is achieved that the amount of modified content from the slurry tanker to be provided to the crops is decreased in order to be able to provide the necessary amount of nitrogen. Often the amount of for example phosphor is much higher than the amount of nitrogen and thus, phosphor is often overdosed. By adding nitrogen the amount of nitrogen and the amount of phosphor can be balanced and leaching of phosphor is no longer an issue. Furthermore, time and money can be saved by rendering a slurry with a higher fertilizer value. Thus, additional distribution of fertilizer becomes superfluous. Hereby, the farmer is saved from distributing fertilizer twice at the same field and he saves money because he needs not buy additional fertilizer. The farmer only needs to buy a liquid nitrogen-containing solution and acid to obtain an increased fertilizing value. These products are commonly cheaper than artificial fertilizer.

Using liquid ammonia or anhydrous ammonia enables the nitrogen source to be readily mixed with the content of the slurry tanker when injected. Furthermore, the nitrogen will be present as mineral nitrogen and can easily be absorbed by the crops. However, the pH of the content of the slurry tanker needs to be adjusted accordingly in order to keep the pH low and hereby prevent emission of ammonia when applied to an agricultural field. Substantive emission would decrease the fertilizing value of the modified slurry.

The liquid nitrogen-containing solution can be for example liquid nitrogen, anhydrous ammonia, liquid ammonia or solutions comprising anhydrous ammonia, liquid ammonia, urea, ammonium nitrate, urea ammonium nitrate, nitrite, and/or nitrate.

Advantageously, the nitrogen tank is provided with a connecting piece for example a valve for emptying the nitrogen tank and a connecting piece for example a valve for refilling the nitrogen tank. Alternatively, the connecting pieces for emptying and for refilling are one and the same.

When anhydrous ammonia is added to the content of the slurry tanker, the nitrogen tank containing the anhydrous ammonia is a pressure tank. Advantageously, the pressure tank is provided with a manometer. Additionally, the pressure tank is provided with a pressure-controlled safety valve.

When using anhydrous ammonia, the nitrogen-containing substance is under pressure and thus, the anhydrous ammonia is easily injected into the slurry. Furthermore, the anhydrous ammonia is easily mixed with the slurry when injected under pressure. In addition, due to the chemical composition of anhydrous ammonia it is easily dissolved in the slurry. Furthermore, the concentration of nitrogen in anhydrous ammonia is high. Hereby, the nitrogen tank needs not be refilled as often, which saves both time and money for the farmer.

The liquid nitrogen-containing solution can be added to the slurry without the risk of increasing the emission of ammonia and/or odour from the slurry, since the acid decreases the pH of the slurry. Without the addition of the acid the emission of ammonia would increase when adjusting the slurry with the liquid nitrogen-containing solution for example when the liquid nitrogen-containing solution is anhydrous ammonia or liquid ammonia. Thus, the emission of ammonia and/or odour from the slurry is decreased though an increased fertilizing value of the slurry is obtained by adding both acid and liquid nitrogen-containing solution to the slurry.

In a further advantageous embodiment, the mobile system further comprises one or more sensors able to measure the amount of nitrogen, phosphor and/or potassium in the content of the slurry tanker.

The sensors can be arranged for measuring the amount either directly in the container of the slurry tanker or in the slurry conduits when the slurry is transported from the container to the distribution means.

The content of nitrogen, phosphor and potassium in the content of the slurry tanker can vary depending on the animal from which the content arrives as well as it differs according to the season. Thus, the amount of nitrogen to be added to a specific slurry differ.

Furthermore, different types of crops need different amounts of nitrogen to achieve a proper growth. In addition, the type of soil in a particular field influences the amount and rate of leaching of nitrogen, phosphor, and potassium. Therefore, it is advantageous to be able to measure the amount of nitrogen, phosphor, and potassium in the content of the slurry tanker to be able to adjust the level of nitrogen to the particular need. Alternatively, the ratio between nitrogen, phosphor and/or potassium, especially nitrogen and phosphor, can be adjusted when adding nitrogen to the content of the slurry tanker. Hereby, the fertilizing value of the slurry can be further increased.

The level of nitrogen can be measured through an external NIR sensor system or it can be integrated in the control system of the mobile system. Measuring the amount of nitrogen in the content of the slurry tanker on the fly enables the system to distribute the modified substance according to kg N pr. Ha rather than m³ slurry pr. Ha. As each tank load has a varied amount of kg N pr. Ha, this is a great advantage in order to distribute the ideal amount of nutrients which is part of the modified substance. Additionally, algorithms in the system will then determine whether the needed amount of acid will only comply with current legislation or more acid should be added in order to optimise the economical benefit.

In a further advantageous embodiment, the mobile system further comprises a control unit, where said control unit adjusts the amount of liquid nitrogen-containing composition added to said content of said slurry tanker.

In one embodiment, said control unit controls hydraulic or electric activated actuating means comprised in one or more valves.

The control unit can be coupled with the sensors measuring the amount of nitrogen, phosphor and/or potassium in the content of the slurry tanker. The amount of liquid nitrogen-containing composition added to the content of the slurry tanker can, thus, be adjusted according to the amount of nitrogen, phosphor and/or potassium in the content of the slurry tanker and an optimal ratio between the amounts of nitrogen, phosphor and/or potassium can be achieved in the content of the slurry tanker before the modified content is distributed to the field.

As an example the level of nitrogen and phosphor can be measured and additional nitrogen in the form of a liquid nitrogen-containing composition can be added to the content of the slurry tanker to adjust the level of nitrogen in the content of the slurry tanker to a level, where the crops achieves both sufficient nitrogen and sufficient phosphor when distributing the content of the slurry tanker, however, where the amount of phosphor is as low as to prevent leaching. By increasing the fertilizing value of the slurry by a mobile system as described in this application, a sustainable distribution of nitrogen, phosphor, and potassium can, thus, be obtained.

In another embodiment, the control unit is not coupled with sensors measuring nitrogen, phosphor and/or potassium but can be controlled to add a specific amount of a liquid nitrogen-containing composition to the slurry. The amount can either be predetermined or arbitrarily.

In further advantageous embodiment, the mobile system further comprises a GPS function connected with the NIR sensor system. Hereby, the amount of nitrogen added to the content of the slurry tanker can be adjusted according to the distribution site correcting the amount depending on the type of soil. Beforehand an application map has to be created with coordinates specific for particular areas of the field. The application map can be created using techniques commonly known to the skilled person. Advantageously, this is managed through the electronic communication unit (ECU) and controlled by an operator interface system.

The control unit can be controlled either automatically or manually.

All data communication on the mobile system can be managed through the ECU - Electronic communication Unit and controlled by an operator interface system, which is controlled from the terminal unit. The terminal unit can be either integrated into the tractors existing interface system or retrofitted.

A fleet management unit can further be installed to the system in order to improve documentation. The fleet management unit can contain a positioning system, telecommunication ability and log function, monitors the operation and stores the information on a card and sends the data on-line to a server that provides the needed documentation to the authorities.

In a further advantageous embodiment, said mobile system further comprises a foam generating means, said foam generating means turns at least a part of said content of said slurry tanker into foam.

Foam can be used to prevent emission of for example ammonia as well as odour from the modified slurry when distributed if the foam is arranged on top of the distributed slurry. The foam is generated from part of the slurry or modified slurry. The foam slowly dissolves to liquid form, enabling the soil to absorb all of the nutrients from the foam. The foam reduces the volatilization of unwanted volatile substances like NH₃ because the bobble structure of the foam causes the diffusion rate of the volatile substance to be lowered, hereby diminishing the diffusion. By emission from the slurry is to be interpreted as emission primarily of ammonia but also of other fertilizing, nutritive or smelling substances of the slurry.

As an example a part of the slurry can be taken from the container of the slurry tanker or from the slurry conduit. This part is then transported to a foam generating means, where foam is generated, and from here to the distributing means or the mixer where it is mixed with the slurry to be distributed. The foam and the slurry are then distributed together at the field. Due to the nature of the foam, it will naturally form a two-part layer with the slurry after distribution, whereby the foam after a short while will be at the top and prevent emission from the slurry. Alternatively, the foam and the modified slurry are mixed in a mixer arranged at the back of the container of the slurry tanker. However, the mixing of the modified slurry and the foam can be performed in the distributing means.

Advantageously, the slurry is mixed with the liquid nitrogen-containing solution and the acid before a part hereof is created to foam. However, the foaming process can be performed on non-modified slurry or slurry only modified by adding liquid nitrogen-containing solution.

In a further advantageous embodiment, said foam generating means is a compressed air foam system or an air aspirated foam system.

Foaming equipments such as CAPS (compressed air foam system) have the ability to create different types of foam with different bubble sizes and drain time and is excellent for the creation of foam as an emission reduced substance.

In addition, multiple CAPS equipments are today capable of generating two or more separate streams where the physical characteristics of the foam differs e.g. a fine and a coarser bobble structure. After generating the different types of foams these can be gathered into one stream within the CAFS equipment and as such be transported. Due to the nature of the foam the foams comprising different physical characteristics do not mix. Thus, at the application site the more coarse foam ends up closest to the ground while the finer foam ends up on top of the coarse foam.

In a further advantageous embodiment, said foam generating means is a foam-generating agent.

Ferrous chloride and ferrous sulphate can advantageously be used as foam-generating agents, where a large amount of ferrous chloride and/or ferrous sulphate is to be added to a small amount of slurry or modified slurry in order for foam to be generated. Preferably, a ratio between 1:10 - 1:1000 is used.

By using ferrous sulphate it is further achieved that additional sulphur is added to the modified slurry. This improves the fertilizing value of the modified slurry.

As other examples of foam-generating agents, are proteins from slurry, different types of surfactants like sodium lauryl ether sulphate, sodium dodecyl sulphate, and ammonium lauryl sulphate as well as surfactant look-alikes e.g. different types of proteins.

In a further advantageous embodiment, said nitrogen injecting means and said at least one nitrogen tank are connected to said container of said slurry tanker.

The nitrogen injecting means can be coupled to the slurry tanker. The liquid nitrogen-containing composition is then transferred from at least one nitrogen tank, optionally through conduits, to the slurry tanker, where it is mixed with the content of the slurry tanker. By injecting the liquid nitrogen-containing composition directly into the container of the slurry tanker, the content of the slurry tanker e.g. slurry and the liquid nitrogen-containing composition is readily mixed by the mixer in the container of the slurry tanker. Hereby, an instant and automatic mixing is performed. The mixing of the liquid nitrogen-containing composition and the content of the slurry tanker can be performed at any time after filling the content into the slurry tanker and before distributing the modified content to the field.

In a further advantageous embodiment, nitrogen injecting means are connected to said slurry conduit.

The liquid nitrogen-containing composition is then transferred from at least one nitrogen tank, optionally through conduits, to the slurry conduits. Alternatively, the nitrogen injecting means are connected to the slurry pump i.e. the pump pumping the content of the slurry tanker from the slurry tanker towards the distributing means. The liquid nitrogen-containing composition can be added to the content of the slurry tanker after it has been pumped from the container of the slurry tanker but before it is distributed to the field i.e. in the slurry conduit. The mixing between the liquid nitrogen-containing composition and the content is here performed by the flow created by the adding of the liquid nitrogen-containing composition along with the pumping of the content of the slurry tanker.

In a further advantageous embodiment, said nitrogen tank is part of said slurry tanker, preferably arranged in a cavity of said container of said slurry tanker.

The nitrogen tank can be an external nitrogen tank attached to the mobile system. As an example the nitrogen tank can be attached either to the front or the back of the slurry tanker.

In one embodiment, the nitrogen tank is separated from the container of the slurry tanker by a single or a double wall. The nitrogen tank can be formed as a separate tank in front or behind the container of the slurry tanker. Alternatively, the container of the slurry tanker can be divided into two compartments one for containing slurry and one functioning as the nitrogen tank containing the liquid nitrogen-containing composition.

Alternatively, the nitrogen tank is integrated as part of the slurry tanker. If the nitrogen tank is an integrated part of the slurry tanker and comprises a pressure tank, the wall between the content of the slurry tanker and the anhydrous ammonia is a double-wall. In this manner, the nitrogen tank containing the anhydrous ammonia functions as a separate nitrogen tank separate from the container of the slurry tanker.

A cavity can be formed in the container of the slurry tanker for example along the length of the container of the slurry tanker.

In one embodiment, the walls of the cavity are separate from the walls of the nitrogen tank. Hereby, forming double walls between the content of the nitrogen tank and the content of the container of the slurry tanker.

In a further embodiment, the walls of the cavity is constituted by the walls of the nitrogen tank. Thus, forming single walls between the content of the nitrogen tank and the content of the container of the slurry tanker.

In one embodiment, the cavity can be used for inserting a nitrogen tank, which hereby is integrated in the slurry tanker. The cavity can fully or partly enclose the nitrogen tank.

By enclosing the nitrogen tank into a cavity, the nitrogen tank is protected during transportation and damage of the nitrogen tank is avoided.

In one embodiment, the cavity encloses the nitrogen tank except for the top of the tank comprising for example the nitrogen injecting means.

In another embodiment, the cavity only partly encloses the nitrogen tank leaving part of the side as well as the top of the tank free. In this embodiment, the cavity is formed at one of the sides of the container of the slurry tanker.

In a further embodiment, the cavity encloses the nitrogen tank having only the means for refilling visible for example on the back of the container of the slurry tanker enabling refilling of the nitrogen tank. The means for refilling can be arranged at any position feasible for the refilling of the nitrogen tank.The nitrogen injecting means can either be formed for injecting the liquid nitrogen-containing composition into the container of the slurry tanker for example by means of valve or the nitrogen tank can be connected to the slurry conduit or the container of the slurry tanker for example by a conduit and valves.

In one embodiment, the nitrogen injecting means can be arranged in the double-wall between the content of the slurry tanker and the liquid nitrogen-containing composition. Then, the nitrogen tank needs to be correctly inserted for enabling injection of a liquid nitrogen-containing composition from the nitrogen tank to the content of the slurry tanker.

In another embodiment, the nitrogen tank is connected using valves and conduits with the container of the slurry tanker and transports the liquid nitrogen-containing solution.

The nitrogen tank can be of different sizes extending to different length into the container of the slurry tanker i.e. the nitrogen tank extends the entire length of the container of the slurry tanker, 1/2 the length of the container of the slurry tanker, 1/3 the length of the container of the slurry tanker, 2/3 the length of the container of the slurry tanker etc.

In a further advantageous embodiment, the mobile system further comprises at least one additive tank in liquid communication with said mobile system, where said at least one additive tank comprises manganese, zinc, copper, molybdenum, selenium, boron, potassium, ferrous sulphate, and/or ferrous chloride. Hereby, fertilizer trace elements as well as potassium and sulphur can be added to the slurry for further modification of the nutrient content and for increasing the fertilizing value.

Furthermore, the additive tank further enables adjustment of the content of the slurry tanker in order to reduce emission of especially odour from the content of the slurry tanker distributed by adding compounds such as ferrous chloride, ferrous sulphate, and/or manganese sulphate from the additive tank to the content of the slurry tanker. The liquid communication between the additive tank and the mobile system is in the form of conduits. Optionally, one or more pumps, control units and/or valves through which the content of the additive tank is added to the content of the slurry tanker are also provided with the additive tank. The content of the additive tank can be added to the content of the slurry tanker either before or after the addition of acid and either before or after the addition of the liquid nitrogen-containing composition.

Ferrous sulphate can be added in order to decrease e.g. the amount of phosphate in the content of the slurry tanker. Thus, the content of the slurry tanker distributed to the field is lowered in phosphate content and the amount of the liquid nitrogen-containing composition to be added need not be as large in order to achieve a sustainable distribution of nitrogen and phosphor with high fertilizing value.

The system can comprise more than one additive tank in order to add more than one additive to the slurry or modified slurry. Alternatively, more additives can be mixed in one tank.

In a further advantageous embodiment, said acid adding means comprises an acid tank arranged at the front of the mobile unit, preferably enclosed in an enclosure.

The acid tank can be arranged at the front of the mobile unit for example attached via a three-point link. In one embodiment, the acid tank is enclosed in an enclosure to protect the acid tank from damage during transportation.

By arranging the acid tank as a front tank in front of the mobile unit a counter weight to the slurry tanker is obtained. Hence, no additional weigth is to be arranged at the front of the mobile unit for example a tractor when the slurry tanker is connected to the tractor in order for the system to function properly.

Furthermore, arranging the acid tank on the front of the mobile unit such as a tractor instead of on the slurry tanker enables more slurry to be transported for each time, since the total weight to be carried by the slurry tanker will not include the acid but only the slurry and the liquid nitrogen-containing composition.

The invention further describes a method for optimising the fertilizing value of a content of the slurry tanker by a mobile system as described, comprising the steps of
- adding a liquid nitrogen-containing composition to said content of said slurry tanker from at least one nitrogen tank, followed by
- adding acid from an acid tank to said content of said slurry tanker to form a modified content, and
- distributing a modified content to an application site.

The amount of nitrogen in the content of the slurry tanker can be adjusted by adding liquid nitrogen-containing composition to the content of the slurry tanker from a nitrogen tank, optionally a pressure tank containing anhydrous ammonia. Hereby, the amount of nitrogen versus phosphor is adjusted accordingly. After adding nitrogen to the content of the slurry tanker, the pH of the content of the slurry tanker is lowered, preferably by sulphuric acid. The lower pH prevents the ammonia from evaporating from the content of the slurry tanker by converting ammonia (NH₃) to ammonium (NH₄⁺). The content of the slurry tanker is therefore transformed into a modified content. The modified content can due to the invention be transformed into an ideal combination where the level of NPPS (nitrogen, phosphor, potassium, and sulphur) is optimised and balanced with regard to increase the fertilizing value of the slurry. The modified content can be distributed to the application site for example a field.

Advantageously, the nitrogen tank is a pressure tank and the liquid nitrogen-containing composition is anhydrous ammonia.

Further, additives can be added to the modified slurry to increase the fertilizing value for example potassium and/or sulphur.

Furthermore, the method can comprise a step of measuring the amount of nitrogen in the content of the slurry tanker before adding a liquid nitrogen-containing composition to said content.

When measuring the nitrogen content of the content of the slurry tanker before adding the liquid nitrogen-containing composition, the amount of a liquid nitrogen-containing composition added to the content of the slurry tanker can be adjusted accordingly to fit to the needs of the crops. Hereby, it is prevented that too much liquid nitrogen-containing composition is added to the content of the slurry tanker, which results in under-treating of the other nutrients. Furthermore, it is prevented that too little liquid nitrogen-containing composition is added to the content of the slurry tanker, which results in overdosing of the other nutrients. In addition, the fertilizing value of the slurry can be optimised.

### Description of the Drawing

- Figure 1: illustrates a first embodiment of a mobile system,
- Figure 2A: illustrates a view from the back of a slurry tanker of the first embodiment,
- Figure 2B: illustrates a close-up of one embodiment of a nitrogen tank,
- Figure 3: illustrates a second embodiment of a mobile system,
- Figure 4: illustrates a third embodiment of a mobile system,
- Figure 5: illustrates a fourth embodiment of a mobile system,
- Figure 6: illustrates a fifth embodiment of a mobile system,
- Figure 7: illustrates a sixth embodiment of a mobile system,
- Figure 8: illustrates a seventh embodiment of a mobile system,
- Figure 9: illustrates an eight embodiment of a mobile system,
- Figure 10: illustrates a CAPS equipment,
- Figure 11: illustrates an air aspirated foam system,
- Figure 12: illustrates a ninth embodiment of a mobile system,
- Figure 13: illustrates a tenth embodiment of a mobile system.

### Detailed Description of the Invention

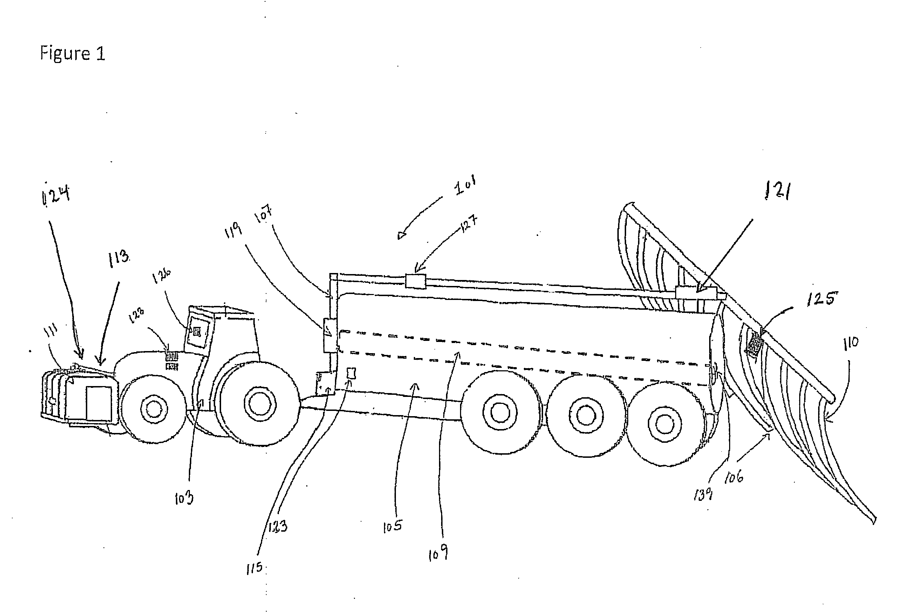

Figure 1 illustrates a first embodiment of a mobile system 101. This mobile system 101 is connected to a tractor 103 and comprises a slurry tanker 105, 107. The slurry tanker comprises a container 105, which is connected with slurry conduits 107 for transporting the content of the slurry tanker from the container 105 to the distributing means 110. The distributing means 110 can for example be a band spreading system. The distributing means 110 distributes the slurry to the field 106 (application site).

The mobile system 101 further comprises a nitrogen tank 109 containing a liquid nitrogen-containing composition to be injected into the content of the slurry tanker. In this embodiment, the nitrogen tank 109 is integrated with the slurry tanker 105, 107 and inserted in a cavity in the container of the slurry tanker 105. In this embodiment, the nitrogen tank 109 is a tube inserted along the entire length of the container of the slurry tanker 105, 107. The nitrogen tank 109 is a tank separate from the slurry tanker 105, 107 and can be removed when empty and then replaced by a full nitrogen tank 109 or refilled.

Nitrogen injecting means 139 comprising a conduit for liquid communication between the nitrogen tank 109 and the container of the slurry tanker 105 is provided. The nitrogen injecting means 139 provides direct injection into the container of the slurry tanker 105 or through the 107 slurry conduits when the slurry is being transported to the field.

At the front of the tractor 103 an acid tank 111 is arranged as a front tank, which is connected via a conduit system to an acid pump 113 in combination with a slurry pump 115. The acid pump 113 functions together with a flow sensor 119 to prevent the acid from being accidentally injected into the slurry tanker 105, 107. In this embodiment, the acid tank 111 is enclosed in an enclosure.

The mixture of acid with slurry is then transported past the flow sensor 119 and the static mixer 121 before it is distributed to the field. Alternatively, the acid can be transported in conduits next to the slurry conduit 107 and mixed with the slurry in the static mixer 121.

The mobile system further comprises one or more pH sensors 123, 125 in order to regulate the amount of acid injected. In this particular illustration two pH sensors are present, one 123 for measuring the pH of the untreated slurry, and one 125 for measuring the pH of the slurry after addition of acid.

The amount of acid to be pumped into the slurry can as well be determined through the flow sensor 119 alone or in combination with one or both pH sensors 123, 125. Further adjustment of the amount of acid pumped into the slurry can be performed by a NIR system 127, which measures the amount of nitrogen, which measures the pH value that determines the level of NH₃ versus NH₄⁺. Depending on these measurements more or less acid can be added to the slurry.

All data communication on the system is managed through the ECU - Electronic communication Unit 124 and controlled by an operator interface system, which is controlled from the terminal unit 126. The terminal unit 126 can be either integrated into the tractor's existing interface system or retrofitted.

A fleet management unit 128 can further be installed to the system in order to improve documentation. The fleet management unit 128 can contain a positioning system, telecommunication ability and log function, monitors the operation and stores the information on a card and sends the data on-line to a server that provides the needed documentation to the authorities.

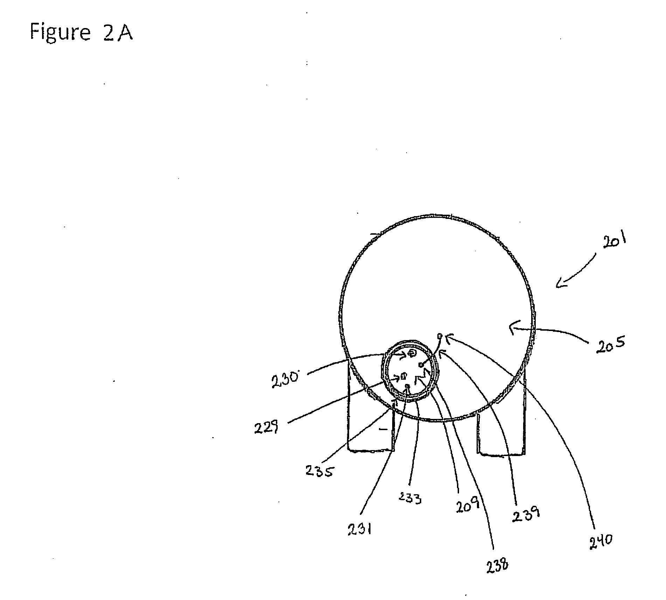

Figure 2A illustrates a view of a part of the first embodiment of the mobile system 201 where the container of the slurry tanker 205 is seen from the back. In a cavity in the container 205, a nitrogen tank 209 is inserted. The nitrogen tank 209 comprises a manometer 229 and a valve 231 for refilling the nitrogen tank 209. Advantageously, the nitrogen tank 209 can be refilled, whereby the nitrogen tank 209 needs not to be replaced. Furthermore, the nitrogen tank 209 comprises a pressure-controlled safety valve 230. The manometer 229 and the pressure-controlled safety valve 230 are only necessary when the nitrogen tank 209 is a pressure tank.

The liquid nitrogen-containing composition is separated from the content of the slurry tanker 205 by the wall 233 of the nitrogen tank 209 as well as the wall 235 of the cavity formed by the wall of the container of the slurry tanker 205. Therefore, the nitrogen tank 209 can be removed from the slurry tanker 205 and still provide a functional slurry tanker 205.

The liquid nitrogen-containing composition is transported from the nitrogen tank 209 to the content of the container of the slurry tanker 205 via nitrogen injecting means in the form of valves 238, 240 and a conduit 239, where it is mixed with the content. In case of a pressure tank the liquid nitrogen-containing composition being anhydrous ammonia is automatically transported from the nitrogen tank 209 to the container of the slurry tanker 205 due to the pressure. However, when the nitrogen tank 209 is not a pressure tank the liquid nitrogen-containing composition is to be pumped from the nitrogen tank 209 to the container of the slurry tanker 205 using a pump. The pump can for example be arranged on the container of the slurry tanker 205 close to the valve 240.

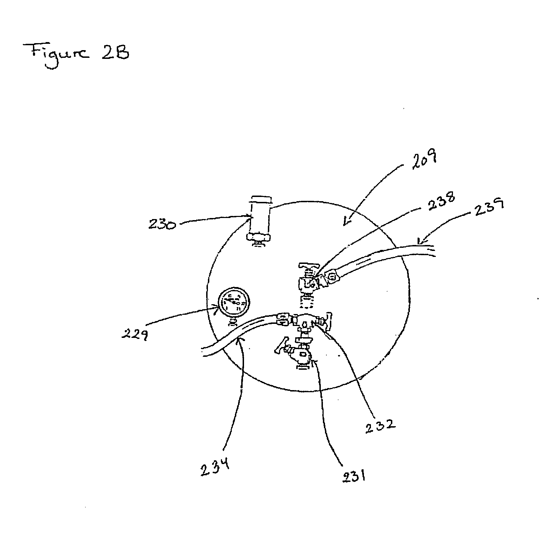

Figure 2B illustrates a close-up of one embodiment of a nitrogen tank 209 arranged as illustrated in figure 2A. The nitrogen tank 209 comprises a manometer 229 and a pressure-controlled safety valve 230. In this embodiment, a tap valve 238 is connected to a conduit 239, through which the liquid nitrogen-containing composition can be transported from the nitrogen tank 209 to the container of the slurry tanker.

In this embodiment, the refill valve 231 is connected with a coupling valve 232 and a conduit 234 through which the nitrogen tank 209 can be refilled.

The valves can be either manually operated or automatically operated by a control-system, where the control-system controls the opening and closing of the valves.

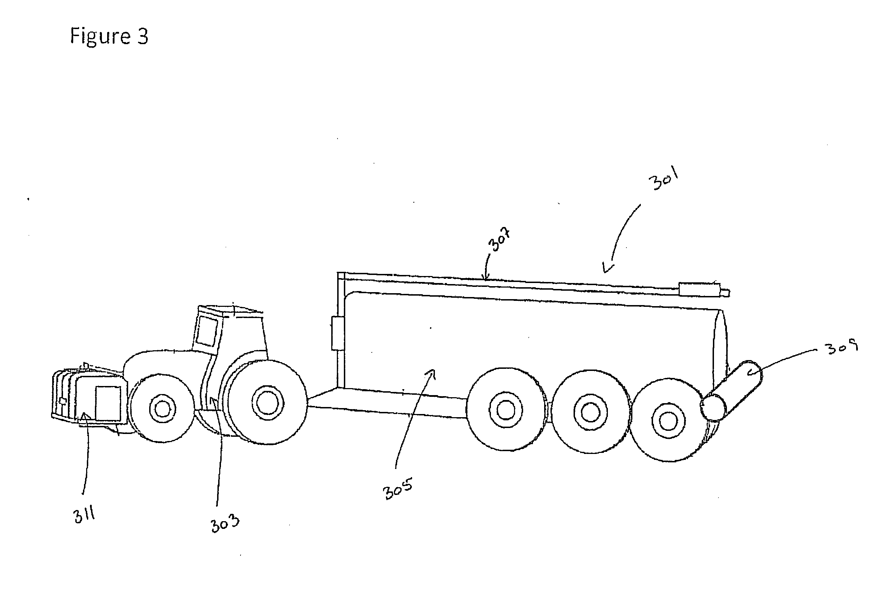

Figure 3 illustrates a second embodiment of the mobile system 301. This mobile system 301 comprises a tractor 303 with an acid tank 311 as well as a slurry tanker 305, 307. A nitrogen tank 309 is arranged external at the back of the container of the slurry tanker 305. Arranging the nitrogen tank 309 external to the slurry tanker 305, 307 makes it easy to adapt slurry tankers, commonly known, to a mobile system 301 comprising a nitrogen tank 309.

Optionally, the mobile system comprises further elements as described in figure 1.

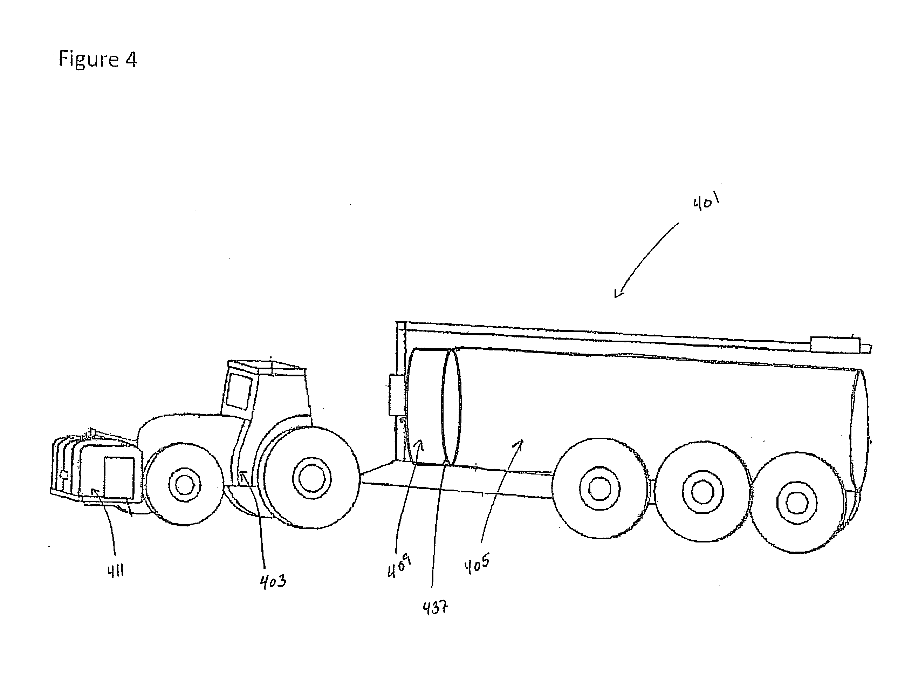

Figure 4 illustrates a third embodiment of the mobile system 401. This mobile system 401 comprises a tractor 403 with an acid tank 411 as well as a slurry tanker 405, 407. A nitrogen tank 409 is arranged integral with the container of the slurry tanker 405. The nitrogen tank 409 is either arranged in front of the container of the slurry tanker 405 or a double-wall 437 is arranged in the container of the slurry tanker 405 forming a nitrogen tank 409 and an additional room for containing slurry.

Optionally, the mobile system comprises further elements as described in figure 1.

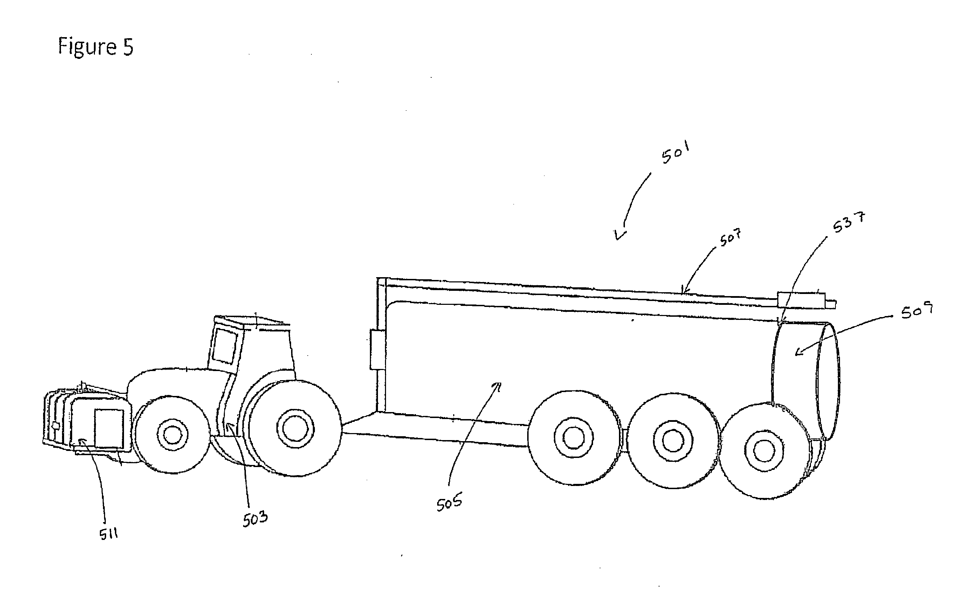

Figure 5 illustrates a fourth embodiment of the mobile system 501. The mobile system 501 comprises a tractor 503 with an acid tank 511 as well as a slurry tanker 505, 507. A nitrogen tank 509 is arranged integral with the container of the slurry tanker 505. The nitrogen tank 509 is either arranged on the back of the container of the slurry tanker 505 or a double-wall 537 is arranged in the container of the slurry tanker 505 forming a nitrogen tank 509 and an additional room for containing slurry.

Optionally, the mobile system comprises further elements as described in figure 1.

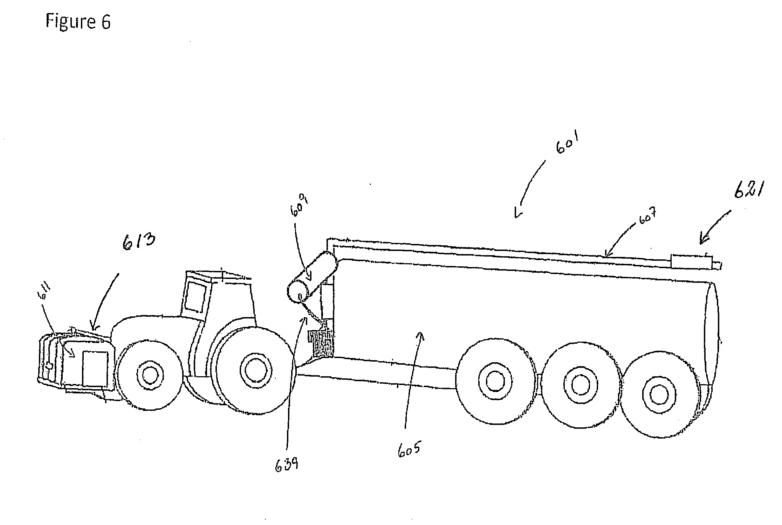

Figure 6 illustrates a fifth embodiment of the mobile system 601. The mobile system 601 comprises a nitrogen tank 609 arranged external at the front of the slurry tanker 605, 607.

In this embodiment, the nitrogen tank 609 is connected by means of injecting a liquid nitrogen-containing composition 639 to the slurry conduits 607, which transport the content of the slurry tanker 605 to the distributing means. The liquid nitrogen-containing composition is, hence, injected into the slurry after it has been pumped from the container of slurry tanker 605 but before acid is added via conduits at the static mixer 621 from the acid tank 611 by the use of an acid pump 613.

Optionally, the mobile system comprises further elements as described in figure 1.

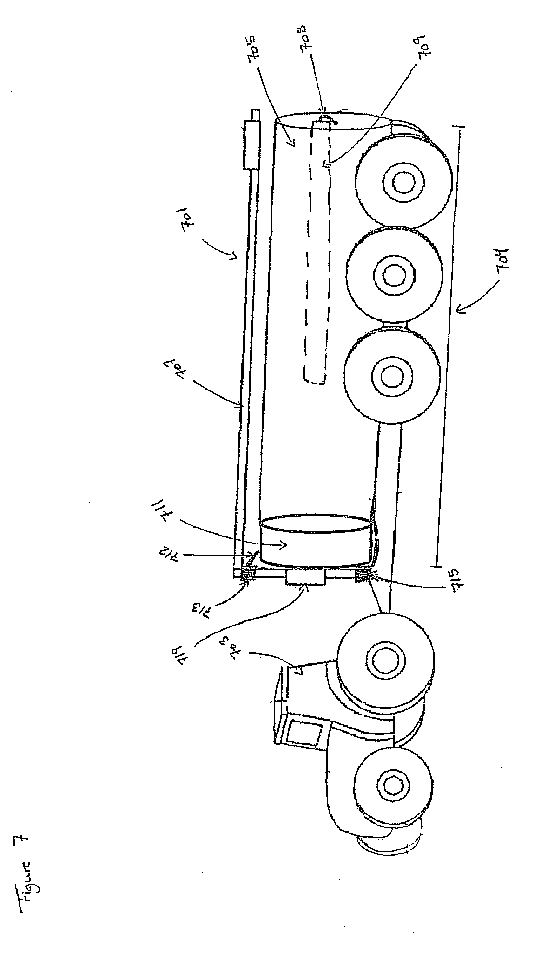

Figure 7 illustrates a sixth embodiment of a mobile system 701. This mobile system 701 is connected to a tractor 703 and comprises a slurry tanker 705, 707. The slurry tanker comprises a container 705, which is connected with slurry conduits 707 for transporting the content of the slurry tanker from the container 705 to the distributing means (not illustrated).

The mobile system 701 further comprises a nitrogen tank 709 containing a liquid nitrogen-containing composition to be injected into the content of the slurry tanker 705, 707. In this embodiment, the nitrogen tank 709 is integrated in a cavity in the container of the slurry tanker 705. In this embodiment, the nitrogen tank 709 is a conduit inserted along substantially half the length 704 of the container of the slurry tanker 705. The nitrogen tank 709 is a tank separate from the container of the slurry tanker 705.

A conduit 708 connects the nitrogen tank 709 to the container of the slurry tanker 705 for transporting the liquid nitrogen-containing composition from the nitrogen tank 709 to the container of the slurry tanker 705. Valves are advantageously present on the nitrogen tank 709 and the container of the slurry tanker 705 for coupling with the tube 708.

An acid tank 711 is arranged at the front of the container of the slurry tanker 705, which is connected via a conduit system 712 to an acid pump 713. A conduit system in combination with a slurry pump 715 pumps slurry from the container 705 to the slurry conduit 707.

The slurry is then transported past the flow sensor 719 before it is distributed to the field.

Optionally, the mobile system comprises further elements as described in figure 1.

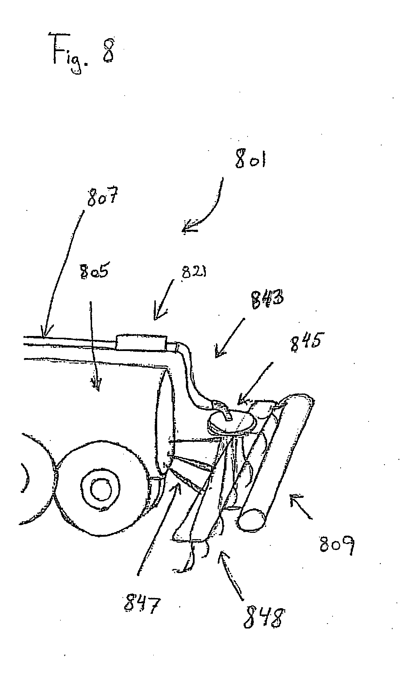

Figure 8 illustrates a seventh embodiment of a mobile system 801, where only a part of the mobile system is seen. The end of the container of the slurry tanker 805 as well as the last part of the slurry conduit 807 is illustrated. The slurry conduit 807 is connected to a mixer 821, where the slurry can be modified by adding acid and a liquid nitrogen-containing composition, if this has not already been performed. The modified slurry is transported to the distribution means such as a soil injector 848 with a distributor 845 via conduits 843. The soil injector 848 is connected to the slurry tanker 805, 807 by a three-point link 847.

Attached to the soil injector 848 is a nitrogen tank 809, which can add liquid nitrogen-containing composition to further modify the slurry. The advantage to this position is that the weight of the nitrogen tank 809 rest on the soil injector 848 when it is in operation and when the nitrogen is injected into the soil, it will not have as much emission and odour.

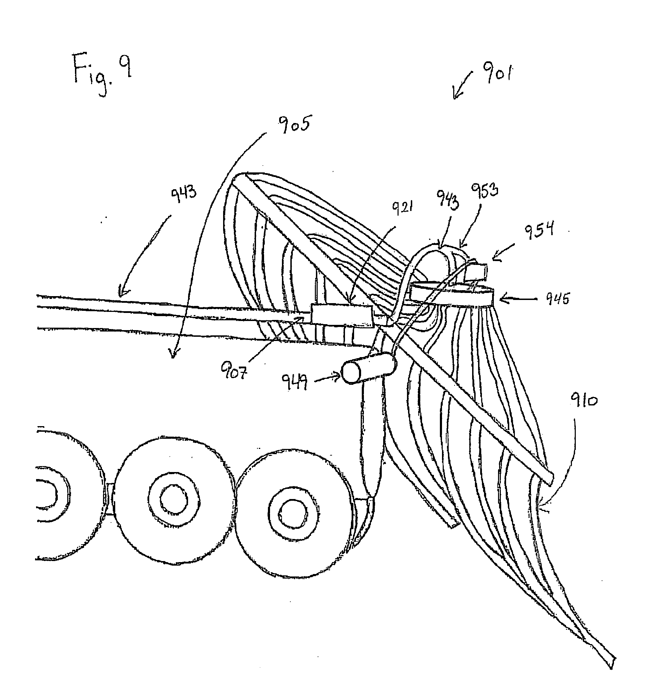

Figure 9 illustrates an eight embodiment of a mobile system 901, where only a part of the mobile 901 system is seen. The end of the container of the slurry tanker 905 as well as the last part of the slurry conduit 907 is illustrated. The slurry conduit 907 is connected to a mixer 921. The modified slurry is transported from the mixer 921 to a distributor 945 via conduits 943.

A part of said modified slurry 953 is mixed with an additive such as ferrous sulphate or ferrous chloride from an additive tank 949 in an additive mixer 954. The mixing results in the creation of foam when sufficient ferrous chloride or ferrous sulphate is used in relation to the amount of modified slurry. The foam is mixed with the non-treated modified slurry in the distributor 945 and distributed to the field using for example a band spreading system 910. The foam will arrange itself on top of the modified slurry and prevent emission in the form of odour and/or ammonia.

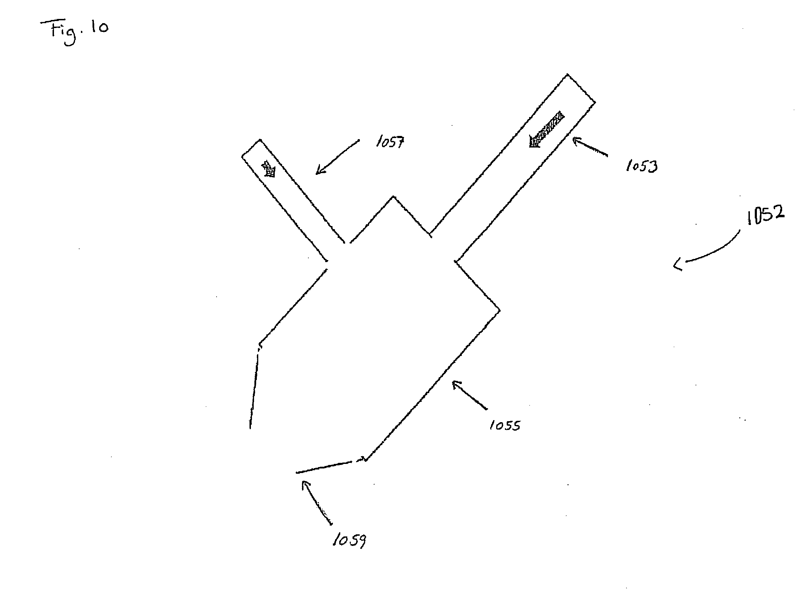

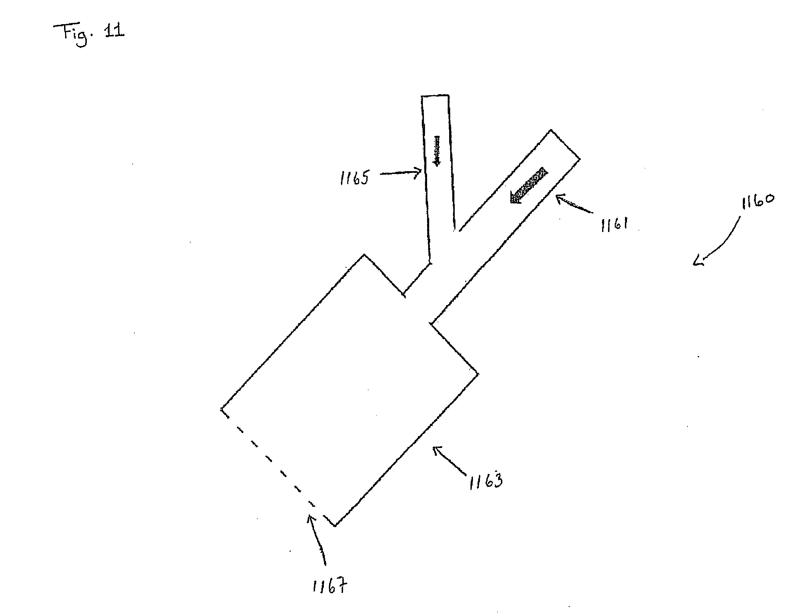

Figure 10 and figure 11 illustrate alternative ways of creating foam. The mobile system can be equipped with either a CAFS equipment or an air aspirated foam system. The CAFS equipment or the air aspirated foam system can be attached to the slurry tanker and a part of the slurry can be led to the CAFS equipment or the air aspirated foam system from the slurry conduits.

Figure 10 illustrates the principles behind the CAFS equipment. Slurry or modified slurry is pumped under pressure through a conduit 1053 into a turbulence chamber 1055. Connected to the turbulence chamber 1055 is further a compressed air inlet 1057. Air is pressed into the turbulence chamber 1055 and mixes herewith whereby foam is created. The foam exits the turbulence chamber 1055 through the nozzle 1059.

Figure 11 illustrates another common system of generating foam - the air aspirated foam system. This system comprises a conduit with slurry or modified slurry pumped under pressure into a turbulence chamber 1163. A natural aspirated air intake 1165 is connected to the conduit 1161. Due to the pressure at which the slurry is introduced air is drawn into the conduit 1161 from the natural aspirated air intake 1165 and air and slurry are mixed into foam in the turbulence chamber 1163. The foam exits the turbulence chamber 1163 through a perforated screen 1167. Compared with the compressed air foam system the physical properties of the foam are more difficult to control with the air aspirated foam system.

In both embodiments as illustrated in Figure 10 and Figure 11 the gas is ordinary air. In another embodiment the air can be replaced by gas as ozone or another gas which besides enabling that the foam to be generated further reduces the odour of the slurry.

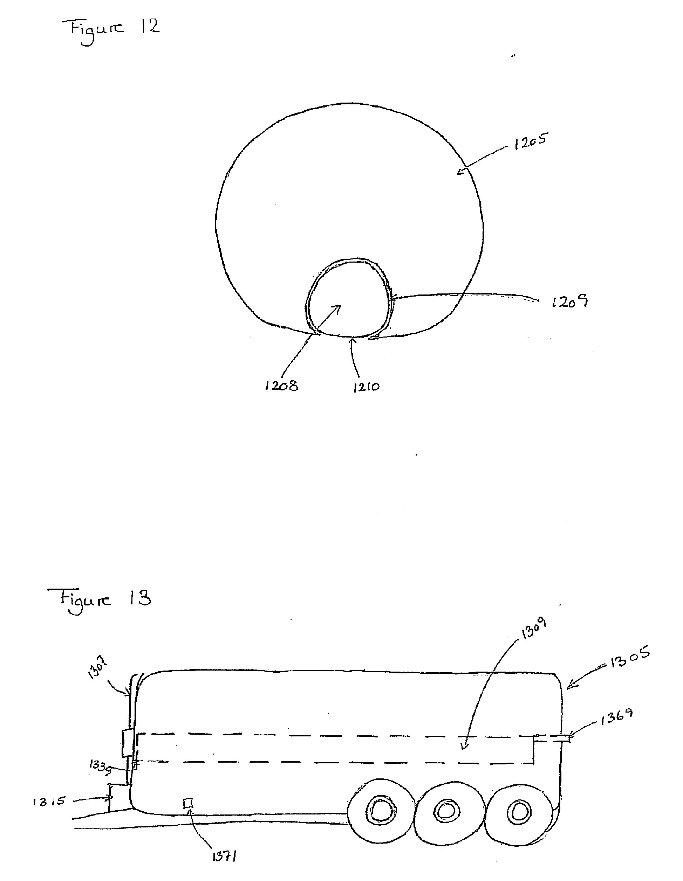

Figure 12 illustrates a ninth embodiment of the mobile system, where the container of the slurry tanker 1205 is seen from the back.

In this embodiment, the nitrogen tank 1209 is partly enclosed in a cavity formed in the container of the slurry tanker 1205. In this embodiment, part of the side 1210 of the nitrogen tank 1209 as well as the top 1208 of the nitrogen tank 1209 is left free and is not enclosed by the container of the slurry tanker 1205.

The nitrogen tank 1209 can further be provided with for example a manometer, valves and nitrogen injecting means (not illustrated) as described in figure 2.

Figure 13 illustrates a tenth embodiment of the mobile system, where a nitrogen tank 1309 fully enclosed in a cavity in the container of the slurry tanker 1305. A means for refilling 1369 connects the nitrogen tank 1309 with the outside of the container of the slurry tanker 1305. Hereby, the nitrogen tank 1309 can easily be refilled whenever needed.

Furthermore, nitrogen injecting means 1339 connects the nitrogen tank 1309 with the slurry conduits 1307 for injecting the liquid nitrogen-containing composition into the slurry after it has been pumped from the container of the slurry tanker 1305 by the slurry pump 1315.

In one embodiment, the valve operates in combination with a sensor 1371 for measuring the content of nitrogen-containing substances in the slurry in the container of the slurry tanker 1305. Thus, the amount of nitrogen-containing substances can be adjusted in a controlled manner. If the batch of slurry contains a high amount of nitrogen-containing substances only a small amount of liquid nitrogen-containing composition is injected into the slurry. If the batch of slurry contains a low amount of nitrogen-containing substances a large amount of liquid nitrogen-containing composition is injected into the slurry.

## Claims

1. A mobile system (101, 201, 301, 401, 501, 601, 701, 801, 901) for optimising the fertilizing value of a slurry, such as a liquid manure, where said mobile system (101, 201, 301, 401, 501, 601, 701, 801, 901) is mounted on a mobile unit (103, 303, 403, 503, 603, 703) and comprises
- a slurry tanker (105, 107); where said slurry tanker (105, 107) comprises a container (105, 205, 305, 405, 505, 605, 705, 805, 905, 1205, 1305) and a slurry conduit (107, 307, 407, 507, 607, 707, 807, 907, 1307), where said slurry tanker (105, 107) is in liquid communication with
- acid adding means (111,311, 411, 511, 611, 711, 113) for adding/injecting an acid to said content of said slurry tanker (105, 107) at an acid injection site arranged along the pathway of the slurry from a slurry pump to distribution means, where said slurry tanker (105, 107) and/or acid adding means (111, 311, 411, 511, 611, 711, 113) is in liquid communication with
- distributing means (110, 910, 848) for allowing a modified slurry to be placed on the application site (106), and where said slurry conduit (107, 307, 407, 507, 607, 707, 807, 907, 1307) transports a content of said slurry tanker (105, 107) from said container (105, 205, 305, 405, 505, 605, 705, 805, 905, 1215, 1305) to said distributing means (110, 910, 848)
**characterised in that** said mobile unit (101, 201, 301, 401, 501, 601, 701, 801, 901) comprises at least one nitrogen tank (109, 209, 309, 409, 509, 609, 709, 809, 1209, 1309) containing a liquid nitrogen-containing composition and nitrogen injecting means (238, 239, 240) for adding said liquid nitrogen-containing composition prior to the addition of acid either into said content in said container (105, 205, 305, 405, 505, 605, 705, 805, 905, 1205, 1305) of the slurry tanker (105, 107), or for adding said nitrogen-containing composition to the slurry conduit (107, 307, 407, 507, 607, 707, 807, 907, 1307) prior to the addition of acid, or for adding said nitrogen-containing composition into a mixer (821), which is arranged in the slurry conduit (807), and into which mixer (821) the acid is also added by the acid adding means.

2. The mobile system (101, 201, 301, 401, 501, 601, 701, 801, 901) according to claim 1 **characterised in that** said nitrogen tank is a pressure tank and said liquid nitrogen-containing composition is anhydrous ammonia.

3. The mobile system (101, 201, 301, 401, 501, 601, 701, 801, 901) according to any of the claims 1-2 **characterised in that** said mobile system (101, 201, 301, 401, 501, 601, 701, 801, 901) further comprises one or more sensors (127) able to measure the amount of nitrogen, phosphor and/or potassium in the content of said slurry tanker (105, 107).

4. The mobile system (101, 201, 301, 401, 501, 601, 701, 801, 901) according to any of the preceding claims **characterised in that** said mobile system (101, 201, 301, 401, 501, 601, 701, 801, 901) further comprises a control unit (124), where said control unit (124) adjusts the amount of liquid nitrogen-containing composition added to said content of said slurry tanker (105, 107).

5. The mobile system (101, 201, 301, 401, 501, 601, 701, 801, 901) according to any of the preceding claims **characterised in that** said mobile system (101, 201, 301, 401, 501, 601, 701, 801, 901) further comprises a foam generating means, said foam generating means turns at least a part of said content of said slurry tanker into foam.

6. The mobile system (101, 201, 301, 401, 501, 601, 701, 801, 901) according to claim 5 **characterised in that** said foam generating means is a compressed air foam system (1052) or an air aspirated foam system (1160).

7. The mobile system (901) according to claim 5 **characterised in that** said foam generating means is a foam-generating agent (949).

8. The mobile system (201) according to any of the preceding claims **characterised in that** said nitrogen injecting means (238,239,240) and said at least one nitrogen tank (209) are connected to said container (205) of said slurry tanker (105, 107).

9. The mobile system (601) according to any of the claims 1-7 **characterised in that** said nitrogen injecting means (639) are connected to said slurry conduit (607).

10. The mobile system (101, 201, 301, 401, 501, 601, 701, 801, 901) according to any of the preceding claims **characterised in that** said nitrogen tank (109, 209, 409, 509, 709, 1209, 1309) is part of said slurry tanker (105, 107), preferably arranged in a cavity of said container (105, 205, 405, 505, 705, 1205, 1305) of said slurry tanker (105, 107).

11. The mobile system (101, 201, 301, 401, 501, 601, 701, 801, 901) according to any of the preceding claims **characterised in that** said mobile system (101, 201, 301, 401, 501, 601, 701, 801, 901) further comprises at least one additive tank in liquid communication with said mobile system (101, 201, 301, 401, 501, 601, 701, 801, 901), where said at least one additive tank comprises manganese, zinc, copper, molybdenum, selenium, boron, potassium, ferrous sulphate, and/or ferrous chloride.

12. The mobile system (101, 201, 301, 401, 501, 601, 701, 801, 901) according to any of the preceding claims **characterised in that** said acid adding means (111, 311, 411, 511, 611, 113) comprises an acid tank (111, 311, 411, 511, 611) arranged at the front of the mobile unit (103), preferably enclosed in an enclosure.

13. A method for optimising the fertilizing value of a content of a slurry tanker (105, 107) using a mobile system (101, 201, 301, 401, 501, 601, 701, 801, 901) according to any of the claims 1-12 comprising the steps of
- adding a liquid nitrogen-containing composition to said content of said slurry tanker (105, 107) from at least one nitrogen tank (109), followed by
- adding acid from an acid tank (111, 311, 411, 511, 611, 711) to said content of said slurry tanker (105, 107) to form a modified content, and
- distributing a modified content to an application site (106).

14. The method according to claim 13 further comprising a step of measuring the amount of nitrogen in the content of the slurry tanker (105, 107) before adding a liquid nitrogen-containing composition to said content.

15. The method according to any of the claims 13-14 **characterised in that** said nitrogen tank (109, 209, 309, 409, 509, 609, 709, 809, 1209, 1309) is a pressure tank and said liquid nitrogen-containing composition is anhydrous ammonia.

## Patentansprüche

1. Mobiles System (101, 201, 301, 401, 501, 601, 701, 801, 901) zur Optimierung des Düngewerts von Gülle, wie beispielsweise von Flüssigmist, wobei das mobile System (101, 201, 301, 401, 501, 601, 701, 801, 901) auf einer mobilen Einheit (103, 303, 403, 503, 603, 703) montiert ist und Folgendes umfasst
- einen Gülletank (105, 107); wobei der Gülletank (105, 107) einen Behälter (105, 205, 305, 405, 505, 605, 705, 805, 905, 1205, 1305) und eine Gülleleitung (107, 307, 407, 507, 607, 707, 807, 907, 1307) umfasst, wobei der Gülletank (105, 107) in Flüssigkeitsverbindung steht mit
- Säurezugabemitteln (111,311,411,511,611,711, 113) zum Zugeben/Einspritzen einer Säure in den Inhalt des Gülletanks (105, 107) an einer Säureeinspritzstelle, die entlang des Pfads der Gülle von einer Güllepumpe zu Verteilungsmitteln angeordnet ist, wobei der Gülletank (105, 107) und/oder Säurezugabemittel (111, 311, 411, 511, 611, 711, 113) in Flüssigkeitsverbindung steht mit
- Verteilungsmitteln (110, 910, 848) um zuzulassen, dass veränderte Gülle auf dem Applikationsort (106) positioniert wird, und wobei die Gülleleitung (107, 307, 407, 507, 607, 707, 807, 907, 1307) einen Inhalt des Gülletanks (105, 107) von dem Behälter (105, 205, 305, 405, 505, 605, 705, 805, 905, 1215, 1305) zu dem Verteilungsmittel (110, 910, 848) transportiert
**dadurch gekennzeichnet, dass** die mobile Einheit (101, 201, 301, 401, 501, 601, 701, 801, 901) mindestens einen Stickstofftank (109, 209, 309, 409, 509, 609, 709, 809, 1209, 1309) umfasst, der eine flüssigstickstoffhaltige Zusammensetzung enthält, und Stickstoffeinspritzmittel (238, 239, 240) zum Zugeben der flüssigstickstoffhaltigen Zusammensetzung vor dem Zugeben von Säure entweder in den Inhalt in dem Behälter (105, 205, 305, 405, 505, 605, 705, 805, 905, 1205, 1305) des Gülletanks (105, 107) oder zum Zugeben der flüssigstickstoffhaltigen Zusammensetzung in die Gülleleitung (107, 307, 407, 507, 607, 707, 807, 907, 1307) vor dem Zugeben von Säure oder zum Zugeben der flüssigstickstoffhaltigen Zusammensetzung in einen Mischer (821), der in der Gülleleitung (807) angeordnet ist, wobei die Säure außerdem durch das Säurezugabemittel in den Mischer (821) zugegeben wird.

2. Mobiles System (101, 201, 301, 401, 501, 601, 701, 801, 901) nach Anspruch 1, **dadurch gekennzeichnet, dass** der Stickstofftank ein Drucktank ist, und wobei die flüssigstickstoffhaltige Zusammensetzung wasserfreies Ammoniak ist.

3. Mobiles System (101, 201, 301, 401, 501, 601, 701, 801, 901) nach einem der Ansprüche 1-2, **dadurch gekennzeichnet, dass** das mobile System (101, 201, 301, 401, 501, 601, 701, 801, 901) weiterhin einen oder mehrere Sensoren (127) umfasst, die zum Messen der Menge an Stickstoff, Phosphor und/oder Kalium in dem Inhalt des Gülletanks (105, 107) in der Lage sind.

4. Mobiles System (101, 201, 301, 401, 501, 601, 701, 801, 901) nach einem der vorangegangenen Ansprüche, **dadurch gekennzeichnet, dass** das mobile System (101, 201, 301, 401, 501, 601, 701, 801, 901) weiterhin eine Steuereinheit (124) umfasst, wobei die Steuereinheit (124) die Menge an flüssigstickstoffhaltiger Zusammensetzung regelt, die dem Inhalt des Gülletanks (105, 107) zugegeben wird.

5. Mobiles System (101, 201, 301, 401, 501, 601, 701, 801, 901) nach einem der vorangegangenen Ansprüche, **dadurch gekennzeichnet, dass** das mobile System (101, 201, 301, 401, 501, 601, 701, 801, 901) weiterhin ein Schaumerzeugungsmittel umfasst, wobei das Schaumerzeugungsmittel mindestens einen Teil des Inhalts des Gülletanks in Schaum umwandelt.

6. Mobiles System (101, 201, 301, 401, 501, 601, 701, 801, 901) nach Anspruch 5, **dadurch gekennzeichnet, dass** das Schaumerzeugungsmittel ein Druckluft-Schaumsystem (1052) oder ein Luftansaugsystem (1160) ist.

7. Mobiles System (901) nach Anspruch 5, **dadurch gekennzeichnet, dass** das Schaumerzeugungsmittel ein Schaumbildner (949) ist.

8. Mobiles System (201) nach einem der vorangegangenen Ansprüche, **dadurch gekennzeichnet, dass** das Stickstoffeinspritzmittel (238,239,240) und der mindestens eine Stickstofftank (209) mit dem Behälter (205) des Gülletanks (105, 107) verbunden sind.

9. Mobiles System (601) nach einem der Ansprüche 1-7, **dadurch gekennzeichnet, dass** das Stickstoffeinspritzmittel (639) mit der Gülleleitung (607) verbunden ist.

10. Mobiles System (101, 201, 301, 401, 501, 601, 701, 801, 901) nach einem der vorangegangenen Ansprüche, **dadurch gekennzeichnet, dass** der Stickstofftank (109, 209, 409, 509, 709, 1209, 1309) Teil des Gülletanks (105, 107) ist, und vorzugsweise in einem Hohlraum des Behälters (105, 205, 405, 505, 705, 1205, 1305) des Gülletanks (105, 107) angeordnet ist.

11. Mobiles System (101, 201, 301, 401, 501, 601, 701, 801, 901) nach einem der vorangegangenen Ansprüche, **dadurch gekennzeichnet, dass** das mobile System (101, 201, 301, 401, 501, 601, 701, 801, 901) weiterhin mindestens einen Zusatzstoffbehälter umfasst, der in Flüssigkeitsverbindung mit dem mobilen System (101, 201, 301, 401, 501, 601, 701, 801, 901) steht, wobei mindestens ein Zusatzstofftank Mangan, Zink, Kupfer, Molybdän, Selen, Bor, Kalium, Eisen(II)-Sulfat und/oder Eisen(II)-Chlorid umfasst.

12. Mobiles System (101, 201, 301, 401, 501, 601, 701, 801, 901) nach einem der vorangegangenen Ansprüche, **dadurch gekennzeichnet, dass** das Säurezugabemittel (111, 311, 411, 511, 611, 711, 113) einen Säuretank (111, 311, 411, 511, 611) umfasst, der vor der mobilen Einheit (103) vorzugsweise in einem Gehäuse umschlossen angeordnet ist.

13. Verfahren zur Optimierung des Düngewerts eines Inhalts eines Gülletanks (105, 107) unter Verwendung eines mobilen Systems (101, 201, 301, 401, 501, 601, 701, 801, 901) nach einem der Ansprüche 1-12, umfassend die Schritte des
- Zugebens einer flüssigstickstoffhaltigen Zusammensetzung zu dem Inhalt des Gülletanks (105, 107) von mindestens einem Stickstofftank (109), gefolgt von
- Zugeben von Säure von einem Säuretank (111, 311, 411, 511, 611, 711) zu dem Inhalt des Gülletanks (105, 107), um einen veränderten Inhalt zu bilden, und
- Verteilen eines veränderten Inhalts auf einem Applikationsort (106).

14. Verfahren nach Anspruch 13, weiterhin umfassend einen Schritt des Messens der Menge an Stickstoff in dem Inhalt des Gülletanks (105, 107) vor dem Zugeben einer flüssigstickstoffhaltigen Zusammensetzung zu dem Inhalt.

15. Verfahren nach einem der Ansprüche 13-14, **dadurch gekennzeichnet, dass** der Stickstofftank (109, 209, 309, 409, 509, 609, 709, 809, 1209, 1309) ein Drucktank ist, und dass die flüssigstickstoffhaltige Zusammensetzung wasserfreies Ammoniak ist.

## Revendications

1. Système mobile (101, 201, 301, 401, 501, 601, 701, 801, 901) pour optimiser la valeur de fertilisation d'une boue tel qu'un engrais liquide, où ledit système mobile (101, 201, 301, 401, 501, 601, 701, 801, 901) est monté sur une unité mobile (103, 303, 403, 503, 603, 703) et comprend
- une citerne de boue (105, 107) ; où ladite citerne de boue (105, 107) comprend un contenant (105, 205, 305, 405, 505, 605, 705, 805, 905, 1205, 1305) et un conduit de boue (107, 307, 407, 507, 607, 707, 807, 907, 1307) où ladite citerne de boue (105, 107) est en communication liquide avec
- des moyens d'ajout d'acide (111, 311, 411, 511, 611, 711, 113) pour l'ajout et l'injection d'un acide audit contenu de ladite citerne de boue (105, 107) sur un site d'injection d'acide agencé le long du parcours de la boue depuis une pompe de boue aux moyens de distribution, où ladite citerne de boue (105, 107) et/ou les moyens d'ajout d'acide (111, 311, 411, 511, 611, 711, 113) sont en communication liquide avec
- des moyens de distribution (110, 910, 848) pour permettre à une boue modifiée d'être placée sur le site d'application (106) et où ledit conduit de boue (107, 307, 407, 507, 607, 707, 807, 907, 1307) transporte un contenu de ladite citerne de boue (105, 107) dudit contenant (105, 205, 305, 405, 505, 605, 705, 805, 905, 1215, 1305) auxdits moyens de distribution (110, 910, 848),
**caractérisé en ce que** ladite unité mobile (101, 201, 301, 401, 501, 601, 701, 801, 901) comprend au moins un réservoir d'azote (109, 209, 309, 409, 509, 609, 709, 809, 1209, 1309) contenant une composition contenant de l'azote liquide et des moyens d'injection d'azote (238, 239, 240) pour ajouter ladite composition contenant de l'azote liquide avant d'ajouter de l'acide dans ledit contenu dans ledit contenant (105, 205, 305, 405, 505, 605, 705, 805, 905, 1205, 1305) de la citerne de boue (105, 107) ou pour ajouter ladite composition contenant de l'azote au conduit de boue (107, 307, 407, 507, 607, 707, 807, 907, 1307) avant d'ajouter de l'acide, ou pour ajouter ladite composition contenant de l'azote dans un mélangeur (821) qui est agencé dans le conduit de boue (807) et dans lequel mélangeur (821) l'acide est aussi ajouté par les moyens d'ajout d'acide.

2. Système mobile (101, 201, 301, 401, 501, 601, 701, 801, 901) selon la revendication 1, **caractérisé en ce que** ledit réservoir d'azote est un réservoir sous pression et ladite composition contenant de l'azote liquide est de l'ammoniac anhydre.

3. Système mobile (101, 201, 301, 401, 501, 601, 701, 801, 901) selon l'une quelconque des revendications 1 à 2, **caractérisé en ce que** ledit système mobile (101, 201, 301, 401, 501, 601, 701, 801, 901) comprend en outre un ou plusieurs capteurs (127) capables de mesurer la quantité d'azote, de phosphore et/ou de potassium dans le contenu de ladite citerne de boue (105, 107).

4. Système mobile (101, 201, 301, 401, 501, 601, 701, 801, 901) selon l'une quelconque des revendications précédentes, **caractérisé en ce que** ledit système mobile (101, 201, 301, 401, 501, 601, 701, 801, 901) comprend en outre une unité de commande (124) où ladite unité de commande (124) ajuste la quantité de composition contenant de l'azote liquide ajoutée audit contenu de ladite citerne de boue (105, 107).

5. Système mobile (101, 201, 301, 401, 501, 601, 701, 801, 901) selon l'une quelconque des revendications précédentes, **caractérisé en ce que** ledit système mobile (101, 201, 301, 401, 501, 601, 701, 801, 901) comprend en outre un moyen de génération de mousse, ledit moyen de génération de mousse transforme au moins une partie dudit contenu de ladite citerne de boue en mousse.

6. Système mobile (101, 201, 301, 401, 501, 601, 701, 801, 901) selon la revendication 5, **caractérisé en ce que** ledit moyen de génération de mousse est un système de mousse à air comprimé (1052) ou un système de mousse à aspiration d'air (1160).

7. Système mobile (901) selon la revendication 5, **caractérisé en ce que** ledit moyen de génération de mousse est un agent générant de la mousse (949).

8. Système mobile (201) selon l'une quelconque des revendications précédentes, **caractérisé en ce que** lesdits moyens d'injection d'azote (238, 239, 240) et ledit au moins un réservoir d'azote (209) sont reliés audit contenant (205) de ladite citerne de boue (105, 107).

9. Système mobile (601) selon l'une quelconque des revendications 1 à 7, **caractérisé en ce que** lesdits moyens d'injection d'azote (639) sont reliés audit conduit de boue (607).

10. Système mobile (101, 201, 301, 401, 501, 601, 701, 801, 901) selon l'une quelconque des revendications précédentes, **caractérisé en ce que** ledit réservoir d'azote (109, 209, 409, 509, 709, 1209, 1309) fait partie de ladite citerne de boue (105, 107), est de préférence agencé dans une cavité dudit contenant (105, 205, 405, 505, 705, 1205, 1305) de ladite citerne de boue (105, 107).

11. Système mobile (101, 201, 301, 401, 501, 601, 701, 801, 901) selon l'une quelconque des revendications précédentes, **caractérisé en ce que** ledit système mobile (101, 201, 301, 401, 501, 601, 701, 801, 901) comprend en outre au moins un réservoir d'additif en communication liquide avec ledit système mobile (101, 201, 301, 401, 501, 601, 701, 801, 901) où ledit au moins un réservoir d'additif comprend du manganèse, du zinc, du cuivre, du molybdène, du sélénium, du bore, du potassium, du sulfate ferreux et/ou du chlorure ferreux.

12. Système mobile (101, 201, 301, 401, 501, 601, 701, 801, 901) selon l'une quelconque des revendications précédentes, **caractérisé en ce que** lesdits moyens d'ajout d'acide (111, 311, 411, 511, 611, 113) comprennent un réservoir d'acide (111, 311, 411, 511, 611) agencé à l'avant de l'unité mobile (103), de préférable enfermé dans une enceinte.

13. Procédé d'optimisation de la valeur de fertilisation d'un contenu d'une citerne de boue (105, 107) en utilisant un système mobile (101, 201, 301, 401, 501, 601, 701, 801, 901) selon l'une quelconque des revendications 1 à 12 comprenant les étapes suivantes :
- l'ajout d'une composition contenant de l'azote liquide audit contenu de ladite citerne de boue (105, 107) d'au moins un réservoir d'azote (109) suivi par
- l'ajout d'acide d'un réservoir d'acide (111, 311, 411, 511, 611, 711) audit contenu de ladite citerne de boue (105, 107) pour former un contenu modifié et
- la distribution d'un contenu modifié à un site d'application (106).

14. Procédé selon la revendication 13, comprenant en outre une étape de mesure de la quantité d'azote dans le contenu de la citerne de boue (105, 107) avant l'ajout d'une composition contenant de l'azote liquide audit contenu.

15. Procédé selon l'une quelconque des revendications 13 à 14, **caractérisé en ce que** ledit réservoir d'azote (109, 209, 309, 409, 509, 609, 709, 809, 1209, 1309) est un réservoir sous pression et ladite composition contenant de l'azote liquide est de l'ammoniac anhydre.
